(19) Europäisches Patentamt / European Patent Office / Office européen des brevets

(11) **EP 4 365 871 B1**

(12) **EUROPÄISCHE PATENTSCHRIFT**

(45) Veröffentlichungstag und Bekanntmachung des Hinweises auf die Patenterteilung:
**17.06.2026 Patentblatt 2026/25**

(21) Anmeldenummer: **23196744.9**

(22) Anmeldetag: **12.09.2023**

(51) Internationale Patentklassifikation (IPC):
**G08G 3/00** (2006.01)   **B63G 8/00** (2006.01)
**B63B 79/20** (2020.01)   **G01C 21/20** (2006.01)

(52) Gemeinsame Patentklassifikation (CPC):
**G08G 3/00; B63B 79/20; G01C 21/203**

(54) **SIGNATURMANAGEMENT UNTER BERÜCKSICHTIGUNG VON SATELLITEN**

SATELLITE SIGNATURE MANAGEMENT CONSIDERATION

GESTION DE SIGNATURE EN TENANT COMPTE DE SATELLITES

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**

(30) Priorität: **14.09.2022 DE 102022209654**

(43) Veröffentlichungstag der Anmeldung:
**08.05.2024 Patentblatt 2024/19**

(73) Patentinhaber:
• **TKMS GmbH**
  **24143 Kiel (DE)**
• **thyssenkrupp AG**
  **45143 Essen (DE)**

(72) Erfinder: **Paulsen, Christian**
  **24220 Flintbek (DE)**

(74) Vertreter: **thyssenkrupp Intellectual Property GmbH**
  **ThyssenKrupp Allee 1**
  **45143 Essen (DE)**

(56) Entgegenhaltungen:
EP-A1- 2 610 636        EP-A2- 3 349 147
US-A1- 2020 018 844     US-B1- 6 935 263

• GRAZIANO M DANIELA ET AL: "Wake-based ship route estimation in high-resolution SAR images", 20141010, vol. 9243, 10 October 2014 (2014-10-10), pages 92430T - 92430T, XP060042255, DOI: 10.1117/12.2067301
• MIAO SHA ET AL: "Wave pattern in the wake of an arbitrary moving surface pressure disturbance", PHYSICS OF FLUIDS, vol. 27, no. 12, 4 December 2015 (2015-12-04), XP093359266, ISSN: 1070-6631, Retrieved from the Internet <URL:https://pubs.aip.org/aip/pof/article-pdf/doi/10.1063/1.4935961/15991159/122102_1_online.pdf> [retrieved on 20260128], DOI: 10.1063/1.4935961

## Beschreibung

Die Erfindung betrifft ein Verfahren zur Reduzierung der Entdeckungswahrscheinlichkeit eines Wasserfahrzeugs, insbesondere eines Unterseebootes, durch einen gegnerischen Beobachtungssatellit, beispielsweise einen Satelliten.

Natürlich ist es bekannt, mit einem Schiff der Detektion zu entgehen, indem die direkte Entdeckung vermieden wird. In einfachster Form hält eine Flotte einen ausreichenden Abstand zur Küste, auch um nicht in einfacher Weise gesehen zu werden. Ebenso können bekannte Routen von Beobachtungssatelliten vermieden werden, um ein Schiff oder eine ganze Flotte einer direkten Beobachtung zu entziehen.

Während bisher das Sonar das Hauptsystem zur Entdeckung feindlicher Unterseeboote oder Radar für Überwasserschiffe war, werden zunehmend andere Verfahren wichtig, je stärker die Boote selber signaturoptimiert sind. Ein derzeit wichtiger Bereich ist die Bugwelle und das Kielwasser. Heute werden unter dem Begriff wake signature auch andere Detektionsmöglichkeiten zusammengefasst. Hierzu wird beispielhaft auf NAVAIRDEVCEN Report No NADC-AW-N5916, 5 Jun 1959, Submarine Wake Detection Program" (AD-C955796) verwiesen. Es ist daher zunehmend von Interesse, auch diese Detektionsarten zu berücksichtigen, die nicht eine direkte Detektion des Schiffes, sondern eine Detektion eines durch das Schiff erzeugen Effekts abzielen, beispielsweise die Detektion der Bugwelle. Wesentlicher Punkt ist, dass es eben bereits reicht, wenn beispielsweise die Bugwelle oder das Kielwasser detektiert werden können. Bugwelle und Kielwasser, aber auch beispielsweise die warmen Abgase eines Motors erstrecken sich über einem wesentlich größeren Bereich, sodass zum einen es wahrscheinlicher wird, dass zwar nicht das Schiff selber, aber dessen wake signature erfasst wird, Zum anderen ist die wake signature wesentlich komplexer, sodass diese nicht als feste Größe in die Routenplanung einbezogen werden kann. Dieses führt dazu, dass das Risiko besteht, dass das Schiff entdeckt wird und das Schiff nicht einmal weiß, dass die Gefahr einer Entdeckung bestand und sich daher der Entdeckung nicht bewusst ist.

Aus der DE 10 2016 202 781 A1 ist eine Vorrichtung zur integrierten Darstellung von Informationen auf einem Wasserfahrzeug bekannt.

Aus der DE 10 2016 202 784 A1 ist ein Verfahren zu einer Routenberechnung bekannt.

Aus der DE 10 2020 200 471 A1 ist ein militärisches Wasserfahrzeug mit Sensoren bekannt.

Aus der US 2020 / 0018844 A1 ist eine Multi-Satelliten-Detektion und Verfolgung für bewegte Objekte bekannt.

Aus der US 6 935 263 B1 ist ein Kielwasser-Absorber bekannt.

Aus der DE 39 08 574 A1 ist eine Verfahren zum Betreiben getauchter Unterseeboote und ein Unterseeboot bekannt.

Aus der DE 101 19 970 B4 ist ein Verfahren zur Erfassung einer Schiffssignatur bekannt.

Aus der EP 2 610 636 A1 ist ein die Bereitstellung von Einblicken in die Seefahrt in nahezu Echtzeit aus Satellitenbildern und externen Daten bekannt.

Aus der EP 3 349 147 A2 ist ein System zur Überwachung von Seefahrzeugen über ein Satellitennetz mit Bestimmung eines Rendezvous zwischen den Schiffen, die innerhalb einer Schwellenentfernung passieren, unter Verwendung der Satellitendaten bekannt.

Erschwerend kommt hinzu, dass zunehmend militärische Satelliten genau für diesen Zweck eingesetzt werden, um feindliche Schiffe zu orten. Hierbei stellt sich die Herausforderung, dass zwar die Satelliten selber gut erfassbar und damit ihre Bahnen gut vorhersagbar sind, die Sensorenfähigkeit und damit die Detektionsgefahr jedoch nur abgeschätzt werden kann.

Aufgabe der Erfindung ist es, die Entdeckungswahrscheinlichkeit für ein Wasserfahrzeug zu minimieren.

Gelöst wird diese Aufgabe durch das Verfahren mit den in Anspruch 1 angegebenen Merkmalen. Vorteilhafte Weiterbildungen ergeben sich aus den Unteransprüchen, der nachfolgenden Beschreibung sowie den Zeichnungen.

Das erfindungsgemäße Verfahren dient zur Evaluierung der Entdeckungsgefahr für ein Wasserfahrzeug durch einen Beobachtungssatellit, beispielsweise und insbesondere einen Beobachtungssatelliten. Das Verfahren ist zur Vermeidung einer indirekten Entdeckung durch die Beobachtung einer Auswirkung des Wasserfahrzeugs auf die Umgebung ausgebildet. Natürlich wird auch wie bisher die direkte Beobachtbarkeit des Wasserfahrzeugs durch den Beobachtungssatellit vermieden. Da die Auswirkung auf die Umgebung raummäßig wesentlich größer ist und zudem sehr stark durch die Betriebsparameter des Wasserfahrzeugs und teilweise durch die Umgebungsbedingungen (wie Wind, Wellengang, Temperatur und dergleichen) stark beeinflusst wird, ist eben eine Entdeckung der Auswirkung möglich, lange bevor das Wasserfahrzeug selber in die direkte Beobachtung gelangt.

Das Verfahren weist die folgenden Schritte auf:

a) Bereitstellen eines Auswirkungsmodells zur Vorhersage der Auswirkungen des Wasserfahrzeugs auf die Umgebung,
b) Bereitstellen einer Datenbank mit Bahnverlaufsdaten des Beobachtungssatelliten und abgeschätzten Erfassungsmöglichkeiten,
c) Erfassen der Position, Geschwindigkeit und Fahrtrichtung sowie des vorgegebenen Kurses des Wasserfahrzeugs,
d) Berechnen von wenigstens einer ersten Umgebungsauswirkung aus den in Schritt c) erfassten Daten und dem in Schritt a) vorgegebenen Modell und Definieren wenigstens eines ersten Bereiches, wobei der erste Bereich alle ersten Umgebungsauswirkungen umfasst,

e) Optional Ermitteln der im ersten Bereich und des Kurses gleichzeitig befindlicher Satelliten aus den in Schritt b) bereitgestellten Daten,

f) Abschätzen eines wahrscheinlichen Beobachtungsraumes für die, beispielsweise und insbesondere in Schritt e) identifizierten, Satelliten,

g) Bestimmung von Überlappung der in Schritt d) ermittelten ersten Bereich und der in Schritt f) ermittelten Beobachtungsraums.

Auswirkungsmodelle im Sinne der Erfindung dienen der Simulation der Auswirkung des Wasserfahrzeugs auf die Umgebung und somit auf Phänomene, die eine Detektion des Wasserfahrzeugs aufgrund der Detektion der lokalen Veränderung der Umgebung ermöglichen. Das Auswirkungsmodell kann eine Mehrzahl an Teilmodellen aufweisen, welche jeweils unabhängige Auswirkungen modellieren. Rein exemplarisch sei dieses an der Bugwelle gezeigt. Die Form der Bugwelle wird insbesondere durch den Öffnungswinkel, welcher für langsame Objekte bei etwa 39 ° liegt, für schnelle Objekte angenähert wird durch:

$$\alpha = arctan\left(\frac{\sqrt{2\pi\left(\frac{U^2}{gL}\right)-1}}{4\pi\left(\frac{U^2}{gL}\right)-1}\right)$$

Mit:

A   Öffnungswinkel der Bugwelle
U   Geschwindigkeit des Wasserfahrzeugs
g   Erdbeschleunigung
L   Länge des Wasserfahrzeugs

Zusätzlich müssen auch die Höhe der Bugwelle und die Zerstreuung der Bugwelle in Abhängigkeit der Bewegung des Wassers berechnet werden. Das Auswirkungsmodell beschreibt also die Auswirkungen anhand der bekannten physikalischen Gesetze. Diese Modelle können als allgemein bekannt angesehen werden. Die Bugwelle kann somit durch die Geschwindigkeit des Wasserfahrzeugs direkt beeinflusst werden.

Ein anderes Auswirkungsmodell kann beispielsweise die Abgase beschreiben. Hier wären als wichtigste Eingangsgröße die Abgastemperatur und der Volumenstrom als variable Größe des Wasserfahrzeugs sowie Windrichtung und Windgeschwindigkeit als wichtige Umgebungsparameter zu berücksichtigen. Auch hier sind einfach die fluiddynamischen Modelle der Physik anzuwenden. Wichtige Einflussgröße für dieses Auswirkungsmodell sidn neben den nicht zu beeinflussenden Umgebungsparametern wie Temperatur und Wind aber auch die zu beeinflussenden Größen, wie zum Beispiel Betriebszustand des Motors, da durch Änderung des Betriebszustand Abgasmenge und Temperatur des Abgases beeinflusst werden kann. Auch durch den Kurs ist hier eine Beeinflussung möglich. Erfolgt die Fahrt gegen den Wind, wird eine schnelle großflächige Verteilung der Abgase erreicht, gleichzeitig aber auch eine schnellere Abkühlung, erfolgt die Fahrt mit dem Wind, wird der vom Abgas eingenommene Raum verkleinert, gleichzeitig aber auch die Temperatur erhöht.

Aus den beiden vorgenannten Beispielen kann ergibt sich bereits, dass zum einen die Teilmodelle unabhängig voneinander sein können und dass sich sehr unterschiedliche Bereiche ergeben, in denen die Auswirkung auftritt, also beispielsweise in erster Bereich für die Bugwelle (meist hinter dem Wasserfahrzeug) und ein zweier Bereich für das Abgas (meist auf der windabgewandten Seite des Wasserfahrzeugs). Des Weiteren ergibt sich, dass die Auswirkung eben auch durch Änderung des Kurses, also dem zukünftigen Verhalten des Wasserfahrzeugs direkt beeinflussbar ist, um so einer Entdeckung entgehen zu können.

Das in Schritt a) bereitgestellte Auswirkungsmodell kann bevorzugt mehrere Teilmodelle aufweisen. Ein Teilmodell dient beispielsweise zur geschwindigkeitsabhängigen Berechnung der Bugwelle. Ein weiteres Teilmodell kann das Kielwasser vorhersagen. Wieder ein weiteres Teilmodell kann beispielsweise die Ausbreitung der Abgase, beispielsweise eines Dieselmotors in der Luft vorhersagen. Hierbei können die Teilmodelle auch situationsabhängig sein. Beispielsweise wird die Bugwelle für ein Unterseeboot unterschiedlich ausfallen, ob dieses an der Oberfläche, auf Schnorcheltiefe oder tief getaucht fährt. Es kann erfindungsgemäß zur Vereinfachung auch vorgesehen sein, nur eine einzige Auswirkung zu betrachten beispielsweise die Bugwelle oder die Kombination aus Bugwelle und Heckwasser. Da das Modell nicht alle Auswirkungen erfassen kann, zumal mit Sicherheit noch nicht alle Auswirkungen bekannt und/oder verstanden sind, muss hier in jedem Fall eine willkürliche Grenze gezogen werden, was berücksichtig wird im Auswirkungsmodell und was nicht.

Ebenfalls kann ein Beobachtungsluftfahrzeug auch ein Flugzeug sein, wenn es eine vorbekannte Route hat. Dieses kann bei regelmäßigen Patrouillenflügen oder auch im Linienverkehr der Fall sein. Überwachungsflugzeuge mit nicht vorhersehbarer Route können naturgemäß nicht berücksichtig werden.

Während die Satellitenbahnen sich relativ einfach durch Beobachtung ermitteln und sehr gut örtlich und zeitlich vorhersagen lassen und somit in Schritt b) bereit gestellt werden können, ist die Abschätzung der Erfassungsmöglichkeiten schwieriger und ungenauer. Die Erfassungsmöglichkeiten werden insbesondere bei militärischen Satelliten im Allgemeinen nicht veröffentlicht. Es ist daher notwendig, die Erfassungsmöglichkeiten abzuschätzen. Soll beispielsweise ein optischer Effekt erfasst werden, so kann von einer Erfassung mit einer Kamera ausgegangen werden. Die maximale Auflösung der Kamera kann aus dem technisch Möglichen als Grenzwert abgeschätzt werden. Würde man, nur als stark gerundetes Zahlenbeispiel betrachtet) von einer Kamera mit einer Auflösung von maximal 100 Millionen Pixel ausgehen, so ergebe sich eine Kantenlänge von 10.000 Pixeln. Wenn wiederrum der zu erfassende Effekt eine Ortsauflösung von maximal 10 cm erfordert, so kann abgeschätzt werden, dass das Erfassungsfenster in der Größe von 1 km mal 1 km liegt. Vier nebeneinander angeordnete Kameras könnten dann ein Fenster von vielleicht 2 km mal 2 km abdecken. Betrachtet man jedoch beispielsweise die Erfassung heißer Abgase im Infrarotbereich, so wird das Fenster deutlich größer sein, da die Pixel jeweils eine deutlich größere Fläche erfassen können und dennoch die Abgasfahne eines Wasserfahrzeugs identifiziert werden kann. Analoge Abschätzungen können auch für beliebige andere Erfassungsarten vorgenommen werden. Es kann dabei also vorgesehen sein für einen Satelliten mit einer unbekannten Erfassungstechnik allgemeine Berechnungen zur Abschätzung der Erfassungsmöglichkeiten anzuwenden, wie sie vorstehend beispielhaft beschrieben sind. Für Satelliten mit bekannter oder teilweise bekannter Erfassungstechnik kann dabei vorgesehen sein, die Erfassungsmöglichkeiten anhand der bekannten technischen Daten zu berechnen und eine Abschätzung durchzuführen.

Neben rein optischen Erfassungen im sichtbaren Bereich oder im infraroten Bereich sind weiter auch Radar oder Lidar als Methoden zur Abstandsbestimmung für Satelliten üblich. Darüber hinaus gibt es auch Sensoren insbesondere für den Bereich der für die Kommunikation üblichen Bereich der elektromagnetischen Strahlung.

Weiter kann vorgesehen sein, dass in Schritt d) Wetterdaten oder Wettervorhersagen berücksichtigt werden. Insbesondere die Bewölkung kann zu einer erheblichen Veränderung der Erfassungsmöglichkeiten eines Satelliten beitragen.

In Schritt c) werden die Daten bevorzugt direkt aus dem Schiffssystem übernommen oder aus diesen ermittelt. Dieses erfolgt bevorzugt kontinuierlich, sodass eine gute Datengrundlage in einfacher Weise gegeben ist. Der vorgegebene Kurs kann dabei die unmittelbare Richtung sein in der sich das Wasserfahrzeug bewegt. Es kann aber auch eine festgelegte oder geplante Route des Wasserfahrzeugs sein, die mit zumindest einer vorgegebenen Position und einer abgeschätzten Zeit an der diese Position erreicht wird, vorgegeben ist.

Mit den in Schritt c) erfassten Daten und dem in Schritt a) bereitgestellten Auswirkungsmodell kann nun in Schritt d) die Umgebungsauswirkung berechnet werden, also beispielsweise die Bugwelle und das Kielwasser, die Ausbreitung der Abgase in der Luft und dergleichen. Dieses ist erfindungswesentlich, denn es geht darum, ob eine Erfassung der Auswirkung auf die Umgebung erfasst werden kann. Dazu muss aber erst einmal die Auswirkung auf die Umgebung bekannt sein. Somit geht es eben nicht mehr nur darum, dass nur das Wasserfahrzeug selbst nicht entdeckt werden soll, sondern auch die Auswirkungen und damit ein wesentlich größerer Raum muss der Entdeckung entzogen werden. Bereits an den vorgenannten Beispielen ist zu sehen, das die Umgebungsauswirkung für unterschiedliche Erfassungsarten unterschiedliche räumliche Geometrien aufweisen wird. Beispielsweise ergibt sich eine Bugwelle mit einem Öffnungswinkel von 39 ° und eine Abgasfahne, welche bei einer Windgeschwindigkeit von der Seite, welche der Fahrtgeschwindigkeit entspricht, eine Ausdehnung in 45 °-Richtung auf der windabgewandten Seite aufweist. Mit zunehmender Entfernung vom Wasserfahrzeug werden sich sowohl die Bugwelle abschwächen als auch das Abgas durch Vermischung abkühlen. Somit ergibt sich ein zeitlich veränderlicher erster Bereich, in dem die Umgebungsauswirkung des Wasserfahrzeugs feststellbar ist. Besonders bevorzugt wird für den ersten Bereich die örtliche Auswirkungsstärke ermittelt. Werden mehrere Effekte mit mehreren Teileffekten berechnet, so kann sich beispielsweise ein erster Bereich für die Bugwelle und ein zweiter Bereich für die Abgase ergeben, wobei die Form und Ausdehnung des ersten Bereichs und des zweiten Bereichs sich unterscheiden werden. Es kann dabei vorteilhaft vorgesehen sein, dass bei der Berechnung Wetterdaten oder Gewässerdaten berücksichtigt werden. Insbesondere bei starken Winden, hohem Wellengang oder starker Strömung sind die Wellenausbreitungen oder Wärmespuren an der Wasseroberfläche und den darüber oder darunterliegenden Schichten schneller mit der Umgebung vermengt als bei wenig signifikanten Wetter- oder Gewässerzuständen.

Wird im Folgenden nur von dem ersten Bereich gesprochen, so ist dieses analog auf alle weiteren Bereiche ebenfalls anwendbar.

In Schritt e) werden nun zunächst die Satelliten ermittelt, deren Bodennullpunkt (Position des Satelliten auf die Erdoberfläche projiziert) sich im relevanten Bereich um die jetzige sowie zeitlich benachbarte vergangene und zukünftige Positionen des Wasserfahrzeugs befindet. Für die relevanten Satelliten wird aus den Erfassungsmöglichkeiten in Schritt f) ein wahrscheinlicher Beobachtungsraum ermittelt.

In Schritt g) werden nun der zeitlich veränderliche ersten Bereich und der zeitlich veränderliche wahrscheinliche Beobachtungsraum miteinander verglichen. Zur Bestimmung von Überlappung wird also nach einer räumlichen Überlappung von dem zeitlich veränderlichen ersten Bereich und dem zeitlich veränderlichen wahrscheinlichen Beobachtungsraum gesucht. Ist eine Überlappung festzustellen, so ist eine Entdeckung des Wasserfahrzeugs wenigstens nicht auszuschließen, gegebenenfalls wahrscheinlich. Werden aus mehreren Teilmodellen mehrere Bereiche, also beispielsweise ein erster Bereich und ein zweiter Bereich ermittelt, so wird diese Betrachtung für jeden Bereich getrennt und unter Berücksichtigung der Fähigkeiten des Satelliten durchgeführt. Es kann auch vorgesehen sein, dass bei mehreren Teilmodellen mehrerer Bereiche die Bereiche addiert werden und ein zusammengesetzter vergrößerter neuer erster Bereich' gebildet wird. Diese Variante ist dann besonders sinnvoll, wenn keine oder nur unsichere Daten über die Detektionstechnik eines Satelliten vorliegen oder wenn verschiedene Auswirkungen mittels der gleichen Detektionsmethode erfassbar sind.

In einer weiteren Ausführungsform der Erfindung werden in Schritt b) zusätzlich in der Datenbank statische Beobachtungspunkte mit abgeschätzten Erfassungsmöglichkeiten bereitgestellt. Statische Beobachtungspunkte können beispielsweise (landgestützte) Radaranlagen, Leuchttürme oder dergleichen sein. Aufgrund des statischen Charakters ist hier von einer besseren Datengrundlage auszugehen.

In einer weiteren Ausführungsform der Erfindung wird, wenn im Schritt g) eine Überlappung des in Schritt d) ermittelten ersten Bereichs und der in Schritt f) abgeschätzten wahrscheinlichen Beobachtungsraumes festgestellt wird, eine Warnung ausgegeben. Ist das Wasserfahrzeug beispielsweise ein Unterseeboot, welches gerade auf Schnorchelfahrt war, so kann nach dieser Warnung das Unterseeboot beispielsweise vollständig tauchen, um sich einer nachfolgenden Ortung, beispielsweise durch einen Hubschrauber oder ein Flugzeug, zu entziehen, welcher nach einer ersten Ortung des Wasserfahrzeugs durch den Satelliten mit hoher Wahrscheinlichkeit zur Beobachtung und/oder Bekämpfung des Wasserfahrzeugs entsendet wird.

Die Warnung kann als optischer und/oder akustischer Hinwies erfolgen. Die Warnung kann an eine oder mehrere Ausgabegeräte oder Personen ausgegeben werden.

Zusätzlich zur Warnung kann eine Handlungsoption angeboten werden.

In einer weiteren Ausführungsform der Erfindung wird in Schritt f) zusätzlich ein Risikoraum ermittelt, der größer als der Beobachtungsraum ist. In Schritt g) wird zusätzlich eine Überlappung der in Schritt d) ermittelten ersten Bereich und des in Schritt f) ermittelten Risikoraums ermittelt. Der Risikoraum kann beispielsweise ein Verschwenken der Kamera im Satelliten oder ein Verkippen des Satelliten berücksichtigen. Eine Detektion außerhalb des abgeschätzten Beobachtungsraums innerhalb des Risikoraums wird als möglich, aber weniger wahrscheinlich zu betrachten sein. Missionsabhängig kann eine mögliche Detektion innerhalb des Risikoraumes als tragbar (Überlappung dann irrelevant) oder als zu vermeiden (Überlappung dann genauso relevant wie die Überlappung mit dem Beobachtungsraum) angesehen werden.

Des Weiteren kann vorgesehen sein, dass auch eine räumliche Annäherung des ersten Bereichs und dem Risikoraum zu erfassen und bei Unterschreitung eines Mindestabstands eine Vorwarnung zu geben.

Des Weiteren kann vorgesehen sein, dass auch eine räumliche Annäherung des ersten Bereichs und dem Beobachtungsraum zu erfassen und bei Unterschreitung eines Mindestabstands eine Vorwarnung zu geben.

In einer weiteren Ausführungsform der Erfindung wird bei einer festgestellten Überlappung in Schritt g) nach Schritt g) der folgende Schritt durchgeführt:
h) Korrektur des Kurses zur Vermeidung einer Überlappung.

In dieser Ausführungsform wird das erfindungsgemäße Verfahren somit prädiktiv in die Routenplanung einbezogen. Der Kurs umfasst hierbei die zukünftigen Fahrparameter des Wasserfahrzeugs. Somit kann beispielsweise Fahrtrichtung und/oder die Geschwindigkeit verwendet werden, um zu erwartenden Satellitenkontakten ausweichen zu können. Hierbei geht es primäre darum, die Auswirkungen auf die Umgebung vollständig aus dem Detektionsbereich herauszuhalten. Die andere Möglichkeit ist, soweit möglich, die eigene Signatur soweit anzupassen, dass trotz der Durchquerung des Beobachtungsraumes eine Beobachtung eben nicht erfolgt oder eine geringe Wahrscheinlichkeit hat. Beispielsweise könnte ein Wasserfahrzeug ohne jeden Antrieb unter einem Infrarotsatelliten durchtreiben und die Maschinen erst wieder aktivieren (und damit erst wieder Abwärme produzieren), wenn der Satellit wieder weiter weg ist. Hierbei geht es also darum, die Auswirkungen soweit zu reduzieren, dass diese unter der Erfassungsschwelle liegen. Beide Verfahren können natürlich auch kombiniert werden, also ein Ausweichen mit gleichzeitiger Signaturreduktion.

In einer weiteren Ausführungsform der Erfindung umfasst die Korrektur in Schritt h) eine Veränderung der Tiefe, wenn als Wasserfahrzeug ein Unterseeboot ausgewählt ist. Beispielsweise kann eine Überwasserfahrt oder eine Schnorchelfahrt beendet und für die Zeit der Überquerung durch den Satelliten auf Tauchfahrt gewechselt werden. Hierdurch können gerade bei längeren Einsätzen beispielweise die Phasen in Schnorchelfahrt, die zum Aufladen der Batterien benötigt werden, gezielt gewählt werden in Zeiten, in denen eine Beobachtung durch Satelliten unwahrscheinlich ist.

In einer weiteren Ausführungsform der Erfindung umfasst die Korrektur in Schritt h) eine Veränderung der Geschwindigkeit des Wasserfahrzeugs. Durch die Veränderung der Geschwindigkeit werden Bugwelle und Kielwasser direkt beeinflusst. Des Weiteren wird durch den veränderten Energiebedarf auch typischerweise die Motorleistung und damit Menge und/oder Temperatur des Abgases beeinflusst. Gleichzeitig kann dadurch der Zeitpunkt der Durchquerung eines bestimmten Raumes variiert werden. Das Wasserfahrzeug kann also beispielsweise einen zu beobachtenden Raum vor oder nach der Beobachtung durch einen Beobachtungssatelliten durchqueren. Bei der Durchquerung vor der Beobachtung ist natürlich zu berücksichtigen, dass sich die Auswirkung auf die Umgebung vor der Beobachtung wieder aufgelöst haben muss, also beispielsweise die Abgase in den Temperaturschwankungen der Umgebung nicht mehr zu erkennen sind.

In einer weiteren Ausführungsform der Erfindung umfasst die Korrektur in Schritt h) eine Veränderung der Betriebsparameter des Wasserfahrzeugs. Beispielsweise ein Unterseeboot weist üblicherweise einen Diesel für die Überwasserfahrt auf und einen außenluftunabhängigen Antrieb für die Unterwasserfahrt, beispielsweise einen Akkumulator und eine Brennstoffzelle. Um nun einer Detektion zu entgehen, kann beispielsweise der Diesel auch bei Überwasserfahrt abgeschaltet werden und der Antrieb aus Akkumulator und Brennstoffzelle betrieben werden. Dadurch werden Abgase und damit eine Detektion durch die Abgase vermieden.

In einer weiteren Ausführungsform der Erfindung werden die in den Schritten d) und f) ermittelten Bereiche visuell wiedergegeben. Dieses ermöglicht einer Besatzung, die Bedrohungslage in einfacher und schneller Form zu erfassen und zu berücksichtigen.

In einer weiteren Ausführungsform der Erfindung umfasst das Auswirkungsmodell in Schritt a) die Bugwelle. Die Bugwelle wird für langsame Geschwindigkeiten mit einem Öffnungswinkel von 39 ° abgeschätzt.

In einer weiteren Ausführungsform der Erfindung werden in Schritt c) zusätzlich Wetterdaten bereit gestellt. Die Wetterdaten werden bei der Berechnen Umgebungsauswirkung in Schritt d) sowie beim Abschätzen eines wahrscheinlichen Beobachtungsraumes in Schritt f) berücksichtigt. Bei der Berechnen Umgebungsauswirkung in Schritt d) kann beispielweise der Wellengang dafür sorgen, dass die Bugwelle beziehungsweise das Kielwasser durch die Wellenbewegung schneller nicht mehr zu erfassen ist. Starker Wind kann beispielsweise die heißen Abgase schneller vermischen und dadurch abkühlen und somit die detektierbare Größe verringern. Bewölkung kann beispielweise dafür sorgen, dass ein Satellit mit einer Erfassung im sichtbaren Bereich des Lichtes nur die Wolken sehen kann. Wetterdaten können im Sinne der Erfindung alle mit dem Wetter korrelierten Daten sein, beispielsweise Temperatur, Luftdruck, Bewölkung, Niederschlagsmenge, Niederschlagsart, Luftfeuchtigkeit, Sichtweite, Windstärke und Windrichtung.

Bevorzugt wird das erfindungsgemäße Verfahren an Bord des Wasserfahrzeugs mit einer elektronischen Datenverarbeitung durchgeführt. Besonders bevorzugt ist das Verfahren softwaretechnisch in das Schiffssystem integriert. Dieses hat den Vorteil, dass die in Schritt c) zu erfassenden Daten direkt aus dem Schiffssystem entnommen werden können. Das Wasserfahrzeug weist daher bevorzugt eine Datenbank auf, in welcher die Satellitendaten gespeichert sind. Das Bereitstellen in Schritt b) erfolgt somit bevorzugt durch das Bereitstellen der Datenbank, beispielsweise durch Einspielen in das Schiffssystem.

Nachfolgend ist das erfindungsgemäße Verfahren anhand eines in den Zeichnungen dargestellten Ausführungsbeispiels näher erläutert.

Fig. 1    erstes Lagebild
Fig. 2    zweites Lagebild
Fig. 3    drittes Lagebild
Fig. 4    Routenplanung

Im Folgenden sind die Betrachtungen exemplarisch für die Bugwelle 20 eines Wasserfahrzeugs 10 gezeigt. Analog ließe sich das Bild auch beispielsweise für die warme Abgasfahne des Wasserfahrzeugs 10 oder das Kielwasser zeigen. Das hier gezeigte Prinzip ist dafür analog anwendbar.

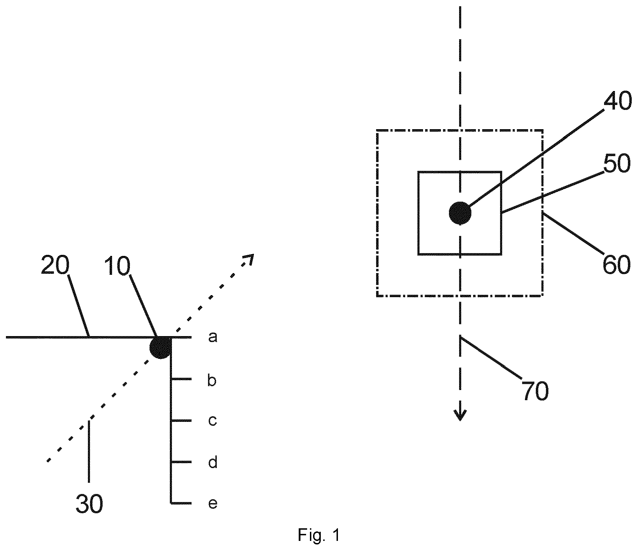

In Fig. 1 ist ein erstes Lagebild stark schematisiert gezeigt. Ein Wasserfahrzeug 10 fährt auf dem Kurs 30. Die Position des Wasserfahrzeugs 10 ist somit zeitabhängig. Ausgehend von Kurs und Geschwindigkeit kann beispielsweise die Bugwelle 20 berechnet werden (hier vereinfacht mit einem Öffnungswinkel von 90 ° statt der üblicherweise auftretenden 39 ° dargestellt). Die Bugwelle selbst ist nicht nur zeitveränderlich, die hat auch eine positionsabhängige Stärke, was in der Abbildung mit den Werten a, b, c, d und e dargestellt sein soll. a ist zum Beispiel 100 %, b 50 %, c 25 %, d 12,5 % und e 6,25 %. Vereinfacht wird für dieses Beispiel davon ausgegangen, dass zum Beispiel bei nur noch 5 % Reststärke der Bugwelle diese vom normalen Wellengang nicht mehr zu unterscheiden und damit nicht mehr zu detektieren ist.

In dem gleichen Gebiet wie das Wasserfahrzeug 10 befindet sich auch ein Satellit 40, welcher sich auf einer Satellitenbahn 70 bewegt. Aus der vorhandenen Kenntnis über den Satelliten 40 wird beispielsweise ein Beobachtungsraum 50 abgeschätzt. In diesem Beobachtungsraum 50 ist das Risiko hoch, wenn das Wasserfahrzeug 10 oder die Bugwelle 20 innerhalb des Beobachtungsraum 50 ist. Zusätzlich wird ein Risikoraum 60 definiert, in dem möglicherweise eine Detektion möglich sein könnte, beispielsweise durch Verschwenken einer Kamera oder des Satelliten 40 selbst.

Im in Fig. 1 gezeigten ersten Lagebild gibt es keine Überlappung zwischen dem Beobachtungsraum 50 oder dem Risikoraum 60 und dem Wasserfahrzeug 10 oder dessen Bugwelle 20. Das Risiko, dass der Satellit 40 die Position des Wasserfahrzeugs 40 ermitteln kann, kann als nicht gegeben angesehen werden, das Wasserfahrzeug 10 bleibt unentdeckt.

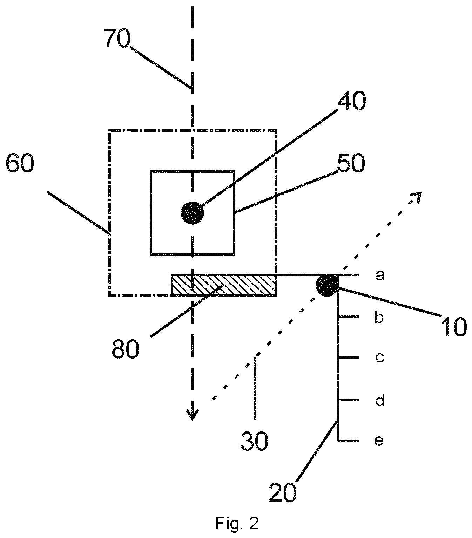

Fig. 2 zeigt ein etwas verändertes zweites Lagebild. Im Gegensatz zum im Fig. 1 gezeigten ersten Lagebild kommt es zu einer Überlappung zwischen dem Risikoraum 60 und der Bugwelle 20. Es ergibt sich somit ein Risikobereich 80, in dem eine Detektion des Wasserfahrzeugs 10 durch den Satelliten 40 vielleicht möglich sein könnte. Es besteht somit ein Restrisiko der Detektion des Wasserfahrzeugs 10 durch den Satelliten 40. Sollte ein solches Lagebild bei der Routenplanung auftauchen, so könnte beispielsweise versucht werden, durch eine geringere Geschwindigkeit eine möglichst schwache Bugwelle 20 auszubilden oder gar die Fahrt zu stoppen, um so der Detektion zu entgehen.

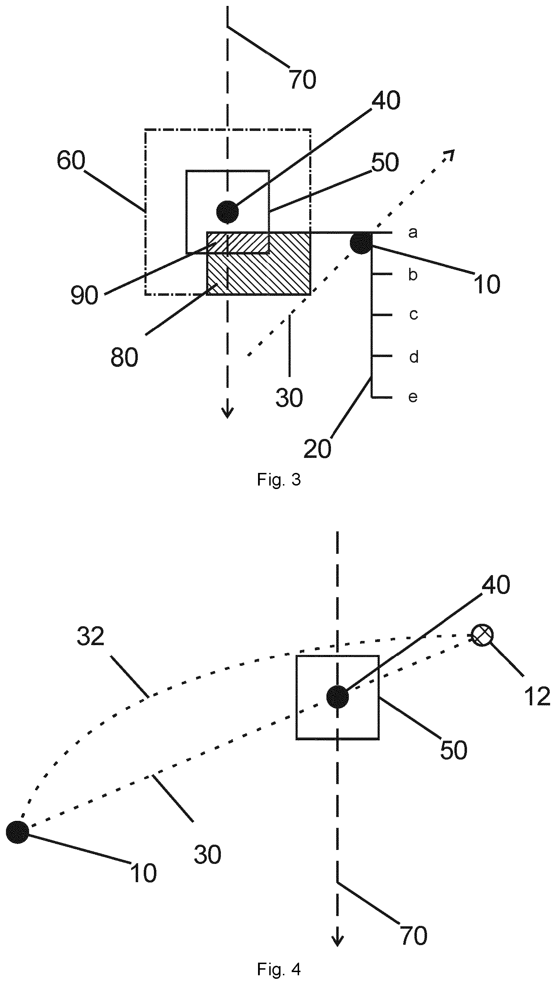

In Fig. 3 ist ein weiteres drittes Lagebild gezeigt. Im Gegensatz zum im Fig. 1 gezeigten ersten Lagebild kommt es zu einer Überlappung zwischen dem Risikoraum 60 und sogar dem Beobachtungsraum 50 und der Bugwelle 20. Es ist somit sehr wahrscheinlich, dass die Anwesenheit des Wasserfahrzeug 10 durch den Satelliten 40 durch dessen Auswirkung auf die Umgebung erkannt wird. Wesentlich ist dabei, dass sich das Wasserfahrzeug 10 noch nicht einmal innerhalb des Beobachtungsraums 50 des Satelliten 40 befindet und dennoch detektiert werden kann.

In der Folge könnten durch den Betreiber des Satelliten 40 weitere Maßnahmen getroffen werden, um das Wasserfahrzeug besser zu orten oder zu identifizieren. Solche Maßnahmen können erhebliche Auswirkungen auf die Mission des Wasserfahrzeugs haben. Dieses verdeutlicht die Bedeutung und die Gefahr, die durch die sogenannte wake signature hervorgerufen wird. Tritt ein solches Lagebild auf, so kann es sinnvoll sein, die Mission abzubrechen und sich zurückzuziehen, da die eigene Position verraten wurde.

Fig. 4 stellt den Fall einer Routenplanung dar. Das Wasserfahrzeug 10 soll zur Zielposition 12. Auf dem Kurs 30 wäre jedoch zu einem Zeitpunkt, an dem das Wasserfahrzeug 10 die Satellitenbahn 70 kreuzt der Satellit 40 über dem Wasserfahrzeug 10, sodass eine Detektion wahrscheinlich ist. Um dieser Detektion zu entgehen, wird ein alternativer Kurs 32 gewählt, welcher nicht nur den Satelliten 40, sondern den gesamten Beobachtungsaum 50 meidet. Da der Satellit 40 sich im gezeigten Beispiel nach unten bewegt, ist ein Passieren hinter (zeitlich, hier dargestellt über) dem Satelliten 40 und dem Beobachtungsraum 50 zielführend, da dann auch keine Bugwelle 20 erfasst werden kann.

Bezugszeichen

10 Wasserfahrzeug
12 Zielposition
20 Bugwelle
30 Kurs
32 alternativer Kurs
40 Satellit
50 Beobachtungsraum
60 Risikoraum
70 Satellitenbahn
80 Risikobereich
90 Gefährdungsbereich

**Patentansprüche**

1. Verfahren zur Evaluierung der Entdeckungsgefahr für ein Wasserfahrzeug (10) zur Vermeidung der Entdeckung des Wasserfahrzeugs (10) durch einen Beobachtungssatellit (40), wobei das Verfahren zur Vermeidung einer indirekten Entdeckung durch die Beobachtung einer Auswirkung des Wasserfahrzeugs (10) auf die Umgebung ausgebildet ist, wobei das Verfahren die folgenden Schritte aufweist:

    a) Bereitstellen eines Auswirkungsmodells zur Vorhersage der Auswirkungen des Wasserfahrzeugs (10) auf die Umgebung,
    b) Bereitstellen einer Datenbank mit Bahnverlaufsdaten den Beobachtungssatelliten (40) und abgeschätzten Erfassungsmöglichkeiten,
    c) Erfassen der Position, Geschwindigkeit und Fahrtrichtung sowie des vorgegebenen Kurses (30) des Wasserfahrzeugs (10),
    d) Berechnen von wenigstens einer ersten Umgebungsauswirkung aus den in Schritt c) erfassten Daten und dem in Schritt a) vorgegebenen Modell und Definieren wenigstens eines ersten Bereiches, wobei der erste Bereich alle ersten Umgebungsauswirkungen umfasst,
    f) Abschätzen eines wahrscheinlichen Beobachtungsraumes (50) für die Satelliten (40),
    g) Bestimmung von Überlappung der in Schritt d) ermittelten ersten Bereich und der in Schritt f) ermittelten Beobachtungsraums (50),

Abschätzung des Risikos der Detektion auf Basis des Überlappes.

2. Verfahren nach Anspruch 1, **dadurch gekennzeichnet, dass** zwischen Schritt d) und Schritt f) der folgende Schritt durchgeführt wird:
e) Ermitteln der in der im ersten Bereich und des Kurses (30) gleichzeitig befindlicher Satelliten (40) aus den in Schritt b) bereitgestellten Daten, sowie dass in Schritt f) ein Abschätzen eines wahrscheinlichen Beobachtungsraumes (50) für die in Schritt e) identifizierten Satelliten (40) erfolgt.

3. Verfahren nach einem der vorstehenden Ansprüche, **dadurch gekennzeichnet, dass** wenn im Schritt g) eine Überlappung von Überlappung der in Schritt d) ermittelten ersten Bereich und des in Schritt f) abgeschätzten wahrscheinlichen Beobachtungsraumes festgestellt wird, eine Warnung ausgegeben wird.

4. Verfahren nach einem der vorstehenden Ansprüche, **dadurch gekennzeichnet, dass** in Schritt f) zusätzlich ein Risikoraum (60) ermittelt wird, der größer als der Beobachtungsraum (50) ist, wobei in Schritt g) zusätzlich eine Überlappung der in Schritt d) ermittelten ersten Bereich und der in Schritt f) ermittelten Risikoraums (60) ermittelt wird.

5. Verfahren nach einem der vorstehenden Ansprüche, **dadurch gekennzeichnet, dass** bei einer festgestellten Überlappung in Schritt g) nach Schritt g) der folgende Schritt durchgeführt wird:
h) Korrektur des Kurses (30) zur Vermeidung einer Überlappung.

**6.** Verfahren nach Anspruch 5, **dadurch gekennzeichnet, dass** die Korrektur in Schritt h) eine Veränderung der Tiefe umfasst, wenn als Wasserfahrzeug (10) ein Unterseeboot ausgewählt ist.

**7.** Verfahren nach einem der Ansprüche 5 bis 6, **dadurch gekennzeichnet, dass** die Korrektur in Schritt h) eine Veränderung der Geschwindigkeit des Wasserfahrzeugs (10) umfasst.

**8.** Verfahren nach einem der Ansprüche 5 bis 7, **dadurch gekennzeichnet, dass** die Korrektur in Schritt h) eine Veränderung der Betriebsparameter des Wasserfahrzeugs (10) umfasst.

**9.** Verfahren nach einem der vorstehenden Ansprüche, **dadurch gekennzeichnet, dass** die in den Schritten d) und f) ermittelten Bereiche visuell wiedergegeben werden.

**10.** Verfahren nach einem der vorstehenden Ansprüche, **dadurch gekennzeichnet, dass** das Auswirkungsmodell in Schritt a) die Bugwelle (20) umfasst, wobei die Bugwelle (20) für langsame Geschwindigkeiten mit einem Öffnungswinkel von 39° abgeschätzt wird.

**11.** Verfahren nach einem der vorstehenden Ansprüche, **dadurch gekennzeichnet, dass** in Schritt c) zusätzlich Wetterdaten bereit gestellt werden und die Wetterdaten bei der Berechnen Umgebungsauswirkung in Schritt d) sowie beim Abschätzen eines wahrscheinlichen Beobachtungsraumes (50) in Schritt f) berücksichtigt werden.

**Claims**

**1.** Method for evaluating the risk of detection for a watercraft (10) to avoid detection of the watercraft (10) by an observation aircraft, the method being designed to avoid indirect detection by an observation satellite (40) of an effect of the watercraft (10) on the environment, the method comprising the following steps:

    a) providing an impact model to predict the effects of the watercraft (10) on the environment,
    b) providing a database of trajectory data for the observation satellite (40) and estimated detection capabilities,
    c) detecting the position, speed and direction of travel as well as the specified course (30) of the watercraft (10),
    d) calculating at least one first environmental effect from the data acquired in step c) and the model specified in step a) and defining at least one first area, the first area comprising all of the first environmental effects,

    f) estimating a probable observation zone (50) for the satellites (40),
    g) determining overlapping of the first area ascertained in step d) and the observation zone (50) ascertained in step f), estimation of the risk of detection based on overlap.

**2.** Method according to Claim 1, **characterized in that** between step d) and step f) the following step is carried out:

    e) ascertaining the satellites (40) located simultaneously in the first area and the course (30) from the data provided in step b),
    and **in that** in step f) estimating of a probable observation zone (50) for the satellites (40) identified in step e) takes place.

**3.** Method according to one of the preceding claims, **characterized in that**, if in step g) an overlap of the first area ascertained in step d) and the probable observation zone estimated in step f) is detected, a warning is issued.

**4.** Method according to one of the preceding claims, **characterized in that** in step f) a risk zone (60) which is larger than the observation zone (50) is additionally ascertained, while in step g) an overlap of the first area ascertained in step d) and the risk zone (60) ascertained in step f) is additionally ascertained.

**5.** Method according to one of the preceding claims, **characterized in that**, if an overlap is determined in step g), the following step is carried out after step g): h) correction of the course (30) to avoid an overlap.

**6.** Method according to Claim 5, **characterized in that** the correction in step h) comprises a change in depth if a submarine is chosen as the watercraft (10).

**7.** Method according to either of claims 5 and 6, **characterized in that** the correction in step h) comprises a change in speed of the watercraft (10).

**8.** Method according to one of Claims 5 to 7, **characterized in that** the correction in step h) comprises a change in the operating parameters of the watercraft (10).

**9.** Method according to one of the preceding claims, **characterized in that** the areas ascertained in steps d) and f) are reproduced visually.

**10.** Method according to one of the preceding claims, **characterized in that** the impact model in step a) comprises the bow wave (20), the bow wave (20) being estimated for slow speeds with an included angle of 39°.

**11.** Method according to one of the preceding claims, **characterized in that** in step c) weather data are additionally provided and the weather data are taken into account when calculating the environmental effect in step d) and when estimating a probable observation zone (50) in step f).

**Revendications**

**1.** Procédé d'évaluation du risque de détection pour une embarcation (10) afin d'éviter la détection de l'embarcation (10) par un avion d'observation, le procédé étant conçu pour éviter la détection indirecte par un satellite d'observation (40) d'un effet de l'embarcation (10) sur l'environnement, le procédé comprenant les étapes suivantes:

a) fourniture d'un modèle d'impact pour prédire les effets de l'embarcation (10) sur l'environnement,
b) fourniture d'une base de données de données de trajectoire pour le satellite d'observation (40) et de capacités de détection estimées,
c) détection de la position, de la vitesse et de la direction de déplacement ainsi que de la route spécifiée (30) de l'embarcation (10),
d) calcul d'au moins un premier effet environnemental à partir des données acquises à l'étape c) et du modèle spécifié à l'étape a) et définition d'au moins une première zone, la première zone comprenant tous les premiers effets environnementaux,
f) estimation d'une zone d'observation probable (50) pour les satellites (40),
g) détermination du chevauchement de la première zone déterminée à l'étape d) et de la zone d'observation (50) déterminée à l'étape f), estimation du risque de détection sur la base du chevauchement.

**2.** Procédé selon la revendication 1, **caractérisé en ce qu'**entre l'étape d) et l'étape f) l'étape suivante est réalisée:

e) détermination des satellites (40) situés simultanément dans la première zone et sur la route (30) à partir des données fournies à l'étape b), et **en ce qu'**à l'étape f) une estimation d'une zone d'observation probable (50) pour les satellites (40) identifiés à l'étape e) a lieu.

**3.** Procédé selon l'une des revendications précédentes, **caractérisé en ce que**, si à l'étape g) un chevauchement de la première zone déterminée à l'étape d) et de la zone d'observation probable estimée à l'étape f) est détecté, un avertissement est émis.

**4.** Procédé selon l'une des revendications précédentes, **caractérisé en ce qu'**à l'étape f) une zone de risque (60) qui est plus grande que la zone d'observation (50) est en outre déterminée, tandis qu'à l'étape g) un chevauchement de la première zone déterminée à l'étape d) et de la zone de risque (60) déterminée à l'étape f) est en outre déterminé.

**5.** Procédé selon l'une des revendications précédentes, **caractérisé en ce que**, si un chevauchement est déterminé à l'étape g), l'étape suivante est réalisée après l'étape g):
h) correction de la route (30) afin d'éviter un chevauchement.

**6.** Procédé selon la revendication 5, **caractérisé en ce que** la correction à l'étape h) comprend un changement de profondeur si un sous-marin est choisi comme embarcation (10).

**7.** Procédé selon l'une quelconque des revendications 5 et 6, **caractérisé en ce que** la correction à l'étape h) comprend un changement de vitesse de l'embarcation (10).

**8.** Procédé selon l'une des revendications 5 à 7, **caractérisé en ce que** la correction à l'étape h) comprend un changement des paramètres de fonctionnement de l'embarcation (10).

**9.** Procédé selon l'une des revendications précédentes, **caractérisé en ce que** les zones déterminées aux étapes d) et f) sont reproduites visuellement.

**10.** Procédé selon l'une des revendications précédentes, **caractérisé en ce que** le modèle d'impact à l'étape a) comprend l'onde d'étrave (20), l'onde d'étrave (20) étant estimée pour des vitesses lentes avec un angle inclus de 39°.

**11.** Procédé selon l'une des revendications précédentes, **caractérisé en ce qu'**à l'étape c) des données météorologiques sont en outre fournies et les données météorologiques sont prises en compte lors du calcul de l'effet environnemental à l'étape d) et lors de l'estimation d'une zone d'observation probable (50) à l'étape f).

Fig. 1

Fig. 2

Fig. 3

Fig. 4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102016202781 A1
- DE 102016202784 A1
- DE 102020200471 A1
- US 20200018844 A1
- US 6935263 B1
- DE 3908574 A1
- DE 10119970 B4
- EP 2610636 A1
- EP 3349147 A2

**In der Beschreibung aufgeführte Nicht-Patentliteratur**

- *NAVAIRDEVCEN Report No NADC-AW-N5916*, 05 June 1959